# EUROPÄISCHE PATENTSCHRIFT

(11) **EP 2 847 110 B1**
(45) Veröffentlichungstag und Bekanntmachung des Hinweises auf die Patenterteilung: **20.07.2016**
(21) Anmeldenummer: 13721329.4
(22) Anmeldetag: 02.05.2013
(51) Int. Cl.: B65G 39/06

(54) **FÖRDERANLAGE MIT VERBESSERTEM TROMMELBELAG FÜR DIE ANTRIEBSTROMMEL, UMKEHRTROMMEL ODER TRAGTROMMELN**
CONVEYING INSTALLATION WITH IMPROVED DRUM COVER FOR THE DRIVING DRUM, REVERSING DRUM OR LOAD BEARING DRUMS
INSTALLATION DE TRANSPORT DOTÉE D'UN REVÊTEMENT AMÉLIORÉ POUR LE TAMBOUR D'ENTRAÎNEMENT, LE TAMBOUR DE RENVOI OU LES TAMBOURS-PORTEURS

(30) Priorität: 07.05.2012 DE 102012103966
(43) Veröffentlichungstag der Anmeldung: 18.03.2015
(73) Patentinhaber: ContiTech Transportbandsysteme GmbH, 30165 Hannover (DE)
(72) Erfinder: THOMCZYK, Andrea, 37079 Göttingen (DE); KANTOREK, Frank, 31275 Lehrte (DE)
(74) Vertreter: Preusser, Andrea
(86) Internationale Anmeldenummer: PCT/EP2013/059091
(87) Internationale Veröffentlichungsnummer: WO 2013/167444

(56) Entgegenhaltungen:
- EP-A1- 0 274 096
- DE-A1- 3 530 034
- FR-A1- 2 113 824
- US-A- 5 381 887
- US-B2- 7 249 442

## Beschreibung

Die Erfindung betrifft eine Förderanlage mit wenigstens einer Antriebstrommel und / oder Umkehrtrommel mit einem Trommelbelag, sowie ferner mit wenigstens einem Fördergurt, Tragrollen und mit Traggerüsten, wobei die Förderanlage ein materialförderndes Obertrum mit einer Aufgabestelle für das Fördermaterial und ein zumeist materialfreies Untertrum ausbildet. Es gibt allerdings auch Förderanlagen, die zusätzlich im Untertrum beladen werden.

Antriebstrommeln, Umkehrtrommeln, Knicktrommeln und deren Trommelbeläge sind beispielsweise aus DE 1 781 214, DD 290 166 A5, DD 290 165 A5 oder DD 267 474 A1 bekannt. FR 2.113.824 beschreibt eine gattungsgemäße Förderanlage.

Die Trommelbeläge für die Antriebstrommel und / oder Umkehrtrommel und / oder Knicktrommeln als wichtige Bauteile einer Förderanlage bestehen, wie bspw. in

DD 267 474 A1 beschrieben, zumeist aus einer Kautschukmischung, enthaltend wenigstens eine Kautschukkomponente oder einen Kautschukkomponentenverschnitt, wenigstens ein Vernetzungsmittel oder ein Vernetzungssystem, umfassend ein Vernetzungsmittel und einen Beschleuniger, sowie zumeist weitere Mischungsingredienzien, insbesondere wenigstens einen Füllstoff und/oder wenigstens ein Verarbeitungshilfsmittel und/oder wenigstens ein Alterungsschutzmittel und/oder wenigstens einen Weichmacher und/oder sonstige Zusatzstoff (z.B. Fasern, Farbpigmente). Bedingt durch die Vulkanisation der Kautschukmischung erfahren die Trommelbeläge entsprechende elastischen Eigenschaften.

Die Trommelbeläge werden üblicherweise kalt auf den einzelnen Trommeln (Antriebstrommel, Umkehrtrommel, Knicktrommel, Tragrollen, etc.) verklebt und dienen zur besseren Kraftübertragung auf den Fördergurt, da ein Durchrutschen von Gummi-Metall durch die zumeist aufgebrachte Gummierung auf der Trommel, die als Trommelbelag bezeichnet wird, reduziert wird. Hierdurch findet ein direkter Kontakt zwischen dem Trommelbelag aus Gummi und einer zumeist gummierten Deckplatte des Fördergurtes statt. Beispielsweise muss die Umfangskraft an der Antriebstrommel so hoch sein, dass sie in der Lage ist, den vorgespannten beladenen Fördergurt reibschlüssig anzutreiben. Der Belag der Trommeln von Gurtförderanlagen hat daher einen entscheidenden Einfluss auf das maximal übertragbare Drehmoment sowie auf die Gurtlebensdauer.

Durchrutschen bedeutet, dass entweder der Fördergurt nicht optimal laufen kann bzw. dass durch eindringendes Fördergut zwischen der Trommeloberfläche und dem Fördergurt Beschädigungen an der Trommel und an dem Fördergurt entstehen können.

Im Rahmen einer Weiterentwicklung besteht die Aufgabe der Erfindung darin, eine Förderanlage bereitzustellen, die sich durch eine Reduzierung von Beschädigungen an der Antriebstrommel und / oder der Umkehrtrommel und / oder der Knicktrommel und / oder der Tragrollen und / oder des Fördergurtes auszeichnet. Daraus ergibt sich vor allem eine erhöhte Lebensdauer der einzelnen Trommeln und / oder des Fördergurtes.

Gelöst wird diese Aufgabe durch eine Förderanlage nach Anspruch 1. Überraschenderweise wurde festgestellt, dass sich eine derartige Schicht aus einer geschäumten Polymermischung positiv auf die Reduzierung von Beschädigungen durch eindringendes Fördergut zwischen der Trommeloberfläche und dem Fördergurt auswirkt.

Die geschäumte Schicht bewirkt einen verbesserten Kraftschluss zwischen Trommeloberfläche und Fördergurt, besonders wenn sich die geschäumte Schicht direkt auf der Oberfläche des Trommelbelags befindet. In diesem Fall kann sogar auf eine zusätzliche Profilierung der Oberfläche, wie sie beispielsweise in DE 28 54 583 A1,

DE 200 18 661 U1, DE 841562, oder DE 200 21 355 U1 beschrieben werden, verzichtet werden.

Gleichzeitig ergibt sich durch das Vorhandensein von wenigstens einer geschäumten zusätzlichen Schicht eine Gewichtsreduzierung, die sich positiv auf die Kosten und den Energieverbrauch auswirkt.

Die begriffe Polymermischung und Kautschukmischung werden synonym verwendet.

Die Erfindung ist grundsätzlich für alle Förderanlagen und alle Arten von Trommeln bzw. Rollen, wie sie an einer Förderanlage verwendet werden, geeignet.

Zu nennen sind hier insbesondere Korrekturrollen, Niederhalterollen bei Rohrfördergurtanlagen, Tragrollen, Stützrollen und Umlenkrollen.

Der Aufbau des Trommelbelages kann hierbei analog dem eines Fördergurtes erfolgen, wobei sowohl auf etwaige textilen Einlagen und / oder auf die Deckplatten verzichtet werden kann.

In einer besonders bevorzugten Ausführungsform enthält der Trommelbelag vorzugsweise wenigstens eine Deckplatte an der Oberfläche des Trommelbelags.

Die Deckplatte kann hierbei als Folie ausgebildet sein, ein Gewebe sein oder aus mindestens einem polymeren Werkstoff aufgebaut sein.

Ist die Deckplatte ist aus jeweils mindestens einem polymeren Werkstoff aufgebaut, so handelt es sich hierbei bevorzugt um einen Kautschuk, der ausgewählt ist aus der Gruppe, bestehend aus bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder Chlorsulfonierter Polyethylenkautschuk (CSM) und / oder Silikonkautschuk (MVQ) und / oder Fluorkautschuk (FPM) handeln.

Die genannten Kautschuke können hierbei alleine oder im Verschnitt eingesetzt werden.

Handelt es sich bei der tragseitigen und / oder laufseitigen Deckplatte um eine Folie oder ein Gewebe, so können hierbei die genannten Werkstoffe ebenso zum Einsatz kommen. Besonders bevorzugt ist es, wenn die Folie auf der Basis wenigstens eines Fluorpolymers aufgebaut ist. In diesem Fall ist eine zusätzliche optimierte Medienbeständigkeit gewährleistet.

Des weiteren kann die Deckplatte neben der Kautschukkomponente wenigstens ein Vernetzungsmittel oder ein Vernetzungssystem, umfassend ein Vernetzungsmittel und einen Beschleuniger, sowie zumeist weitere Mischungsingredienzien, insbesondere wenigstens einen Füllstoff und/oder wenigstens ein Verarbeitungshilfsmittel und/oder wenigstens ein Alterungsschutzmittel und/oder wenigstens einen Weichmacher und/oder sonstige Zusatzstoff (z.B. Fasern, Farbpigmente) enthalten.

Enthält der Trommelbelag mindestens eine textile Einlage, d.h. ein ein- oder mehrlagiges textiles Gebilde, insbesondere in Form eines Gewebes, so besteht dieses bevorzugt aus Baumwolle und / oder Polyamid und / oder Polyester und / oder Aramid und / oder Glas und / oder Basalt und / oder Stahl. Die genannten Werkstoffe können alleine oder in Form von Hybrideinlagen, welche aus wenigstens einem der genannten Werkstoffe aufgebaut sind, eingesetzt werden. Von besonderer Bedeutung ist hier ein Polyamid-PolyesterGewebe.

Erfindungswesentlich ist, dass der Trommelbelag wenigstens eine Schicht aus mindestens einem polymeren Werkstoff enthält, die aus einer geschäumten Polymermischung besteht.

Die qualitative und / oder quantitative Zusammensetzung der geschäumten Polymermischung, abgesehen von den notwendigen Blähmitteln, kann hierbei gleich oder verschieden der Zusammensetzung einer vorhandenen Decklage enthaltend einen polymeren Werkstoff sein. In einer besonders bevorzugten Ausführungsform ist die qualitative und / oder quantitative, insbesondere die qualitative, Zusammensetzung, abgesehen von den notwendigen Blähmitteln, gleich der Zusammensetzung der Kautschukmischung der Decklage. Dadurch wird die Komplexität im Produktionsprozess nicht erhöht und es ergeben sich weitere Vorteile hinsichtlich Zeit und Kosten. Es ist ebenso möglich, dass die Deckplatte des Trommelbelags aus der geschäumten Polymerschicht besteht.

Der Kautschuk für die geschäumte Polymerschicht ist ausgewählt aus der Gruppe, bestehend aus Naturkautschuk (NR) und / oder Butadien-Kautschuk (BR) und / oder Chloropren-Kautschuk (CR) und / oder Styrol-Butadien-Kautschuk (SBR) und / oder Nitrilkautschuk (NBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Polyurethan (PU) und / oder Epichlorhydrinkautschuk (ECO) und / oder chlorsulfonierter Polyethylenkautschuk (CSM) und / oder Silikonkautschuk (MVQ) und / oder Fluorkautschuk (FPM).

Die genannten Kautschuke können hierbei alleine oder im Verschnitt eingesetzt werden. Des Weiteren kann die geschäumte Polymerschicht wenigstens einen Füllstoff in den üblichen Mengen enthalten. Hierbei können alle der fachkundigen Person bekannten Füllstoffe, wie bspw. Kieselsäure, Ruß, Glimmer, Kohlenstoffnanoröhren, Silikate, Alumiumhydroxid, Talk, Kreide, etc. verwendet werden.

Ebenso können alle der fachkundigen Person bekannten weiteren Zusatzstoffe, wie Pigmente, Weichmacher, Ozon- und Alterungsschutzmittel eingesetzt werden.

Die Vulkanisation der geschäumten Schicht erfolgt in der Regel peroxidisch, z.B. wenn EPDM als Kautschukkomponente verwendet wird, oder auch als Schwefelvulkanisation bei Verwendung von NR, BR oder SBR oder auch bisphenolisch bei der Verwendung von bspw. FPM.

Zusätzlich enthält die geschäumte Polymerschicht noch wenigstens ein Blähmittel. Als Blähmittel werden üblicherweise porenbildende Treibgase wie z. B. Azo- und DiazoVerbindungen, bezeichnet, die unter dem Einfluß von Wärme oder Katalysatoren Gase (z. B. N₂ oder CO₂) abspalten und daher zur Herstellung geschäumter Polymermischungen dienen. Die Blähmittel zersetzen sich hierbei bei einer bestimmten Temperatur während der Verarbeitung unter Gas-Bildung oder bei Zusatz von flüchtigen Lösemitteln während der Polymerisation bzw. Vulkanisation. Die Verschäumung erfolgt dann entweder beim Verlassen des Extrusionswerkzeugs, d. h durch Vulkanisation in einer UHF-(Mikrowellen)-Heissluftanlage oder Spritzgießen, oder in offenen Formen.

Bevorzugt hat sich die Verwendung von Blähmitteln, insbesondere von Blähmitteln auf Basis von wenigstens einem Acrylnitrilpolymer, erhältlich unter anderem unter dem Handelsnamen Expancel^{®}, gezeigt.

Des Weiteren können bei Bedarf noch Schaumstabilisatoren hinzugefügt werden.

Die Erfindung wird nun anhand eines Ausführungsbeispiels unter Bezugnahme auf schematische Zeichnungen erläutert. Die Erfindung ist nicht auf die gezeigten Zeichnungen beschränkt.

Es zeigen:
- Fig. 1: eine Förderanlage mit einem Fördergut, einer Trommel und Tragrollen;
- Fig. 2: Querschnitt durch einen Trommelbelag mit einer geschäumten Polymerschicht zwischen Belagsunterseite und Deckplatte
- Fig. 3: Querschnitt durch einen Trommelbelag mit einer geschäumten Polymerschicht als Deckplatte

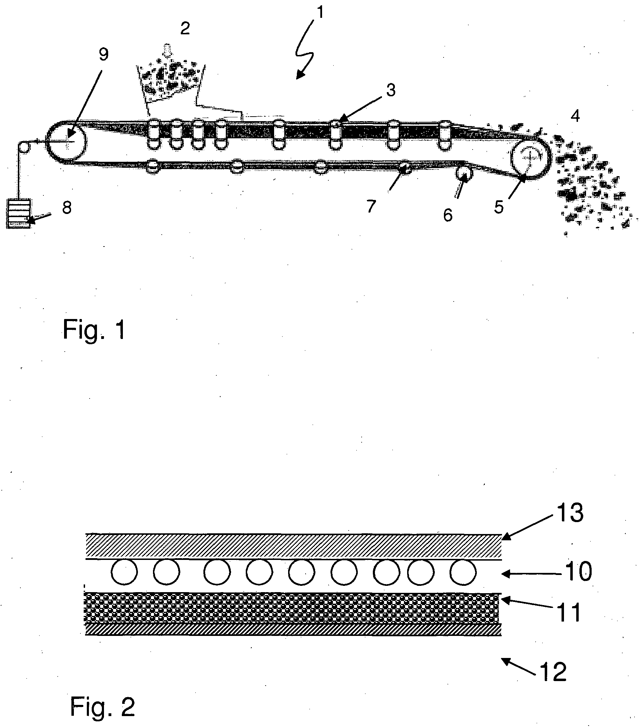

Fig. 1 zeigt eine Förderanlage 1 in Form einer Gurtförderanlage mit einem Fördergut mit Fördergutaufgabe 2 und Fördergutabwurf 4. Des Weiteren enthält die Förderanlage Obertrumtragrollen 3, Untertrumtragrollen 7, eine Knicktrommel 6, eine Umkehrtrommel 9 und eine Antriebstrommel 5. Die Antriebstrommel 5 und / oder Umkehrtrommel 9 und / oder Tragrollen 3,7 und / oder die Knicktrommel 6 enthalten hierbei wenigstens eine Schicht auf der Basis einer geschäumten Polymermischung.

Fig. 2 zeigt einen Querschnitt durch einen Trommelbelag mit einer geschäumten Schicht 10, die sich zwischen Belagunterseite 12 und Deckplatte 13 des Trommelbelags befindet, wobei zusätzlich noch eine eingebettete textile Lage 11 vorhanden ist und die zusätzliche geschäumte Schicht 10 in direktem Kontakt zu der textilen Lage 11 und der Deckplatte 13 steht. Die Deckplatte 13 kann hierbei als Folie oder als Kautschukmischung ausgebildet sein Die Belagunterseite 12 des Trommelbelags kann hierbei auf der Basis einer Kautschukmischung ausgebildet sein oder aus wenigstens einem Metall bestehen.

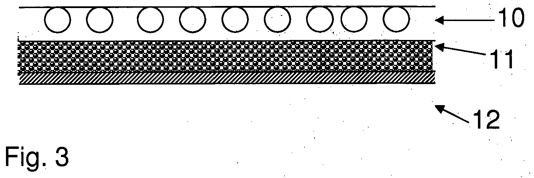

Fig. 3 zeigt einen Querschnitt durch einen Trommelbelag mit einer geschäumten Schicht 10, die als Deckplatte eines Trommelbelags ausgebildet ist. Zwischen Belagunterseite 12 und der geschäumten Schicht 10 befindet sich eine textile Lage 11.

### Bezugszeichenliste

### (Teil der Beschreibung)

- 1: Förderanlage
- 2: Fördergutaufgabe
- 3: Obertrumtragrollen
- 4: Fördergutabwurf
- 5: Antriebstrommel
- 6: Knicktrommel
- 7: Untertrumtragrollen
- 8: Spannvorrichtung
- 9: Umkehrtrommel (Umlenktrommel)
- 10: geschäumte Polymerschicht
- 11: textile Lage
- 12: Belagunterseite des Trommelbelags
- 13: Decklage (Deckplatte)

## Patentansprüche

1. Förderanlage (1) mit einem Fördergurt, sowie ferner mit Trommeln (5, 6, 9), Tragrollen (3, 7) und mit Traggerüsten, wobei die Förderanlage ein materialförderndes
Obertrum mit einer Aufgabestelle für das Fördermaterial (2) und ein zumeist materialfreies Untertrum ausbildet, wobei wenigstens eine Trommel (5, 6, 9) und / oder wenigstens eine Tragrolle (3, 7) einen Trommelbelag besitzt, der wenigstens eine Schicht (10) enthält, die aus einer geschäumten Polymermischung besteht, **dadurch gekennzeichnet, dass** der Kautschuk für die geschäumte Polymerschicht ausgewählt ist aus der Gruppe, bestehend aus Naturkautschuk (NR) und / oder
Butadien-Kautschuk (BR) und / oder Chloropren-Kautschuk (CR) und / oder Styrol-Butadien-Kautschuk (SBR) und / oder Nitrilkautschuk (NBR) und / oder Butylkautschuk (HR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder chlorsulfonierter Polyethylenkautschuk (CSM) und / oder Silikonkautschuk (MVQ) und / oder Fluorkautschuk (FPM).

2. Förderanlage nach Anspruch 1, **dadurch gekennzeichnet, dass** die Deckplatte (13) des Trommelbelags aus einer geschäumten Polymermischung (10) besteht.

## Claims

1. Conveyor installation (1) with a conveyor belt, and moreover with drums (5, 6, 9) and carrier rollers (3, 7), and with support frames, where the conveyor installation forms a material-conveying upper web with an application site for the material (2) to be conveyed, and forms a mostly material-free lower web, where at least one drum (5, 6, 9) and/or at least one carrier roller (3, 7) has a drum covering which comprises at least one layer (10) composed of a foamed polymer mixture, **characterized in that** the rubber for the foamed polymer layer is selected from the group consisting of natural rubber (NR) and/or butadiene rubber (BR) and/or chloroprene rubber (CR) and/or styrene-butadiene rubber (SBR) and/or nitrile rubber (NBR) and/or butyl rubber (IIR) and/or ethylene-propylene rubber (EPM) and/or ethylene-propylene-diene rubber (EPDM) and/or polyacrylate rubber (ACM) and/or epichlorohydrin rubber (ECO) and/or chlorosulfonated polyethylene rubber (CSM) and/or silicone rubber (MVQ) and/or fluoro rubber (FPM).

2. Conveyor installation according to Claim 1, **characterized in that** the outer sheet (13) of the drum covering is composed of a foamed polymer mixture (10).

## Revendications

1. Installation de transport (1) comportant une courroie transporteuse, ainsi qu'en outre des tambours (5, 6, 9), des rouleaux porteurs (3, 7) et des infrastructures, l'installation de transport réalisant un brin supérieur pour le transport des matières, avec un point de chargement pour les matières à transporter (2), et un brin inférieur, le plus souvent sans matières, au moins un tambour (5, 6, 9) et/ou au moins un rouleau porteur (3, 7) possédant une garniture de tambour, qui contient au moins une couche (10) qui est constituée d'un mélange de polymères expansés, **caractérisée en ce que** le caoutchouc destiné à la couche de polymères expansés est choisi dans le groupe consistant en le caoutchouc naturel (NR) et/ou le caoutchouc butadiène (BR) et/ou le caoutchouc chloroprène (CR) et/ou le caoutchouc styrène-butadiène (SBR) et/ou le caoutchouc nitrile (NBR) et/ou le caoutchouc butyle (IIR) et/ou le caoutchouc éthylène-propylène (EPM) et/ou le caoutchouc éthylène-propylène-diène (EPDM) et/ou le caoutchouc polyacrylate (ACM) et/ou le caoutchouc épichlorhydrine (ECO) et/ou le caoutchouc polyéthylène chlorosulfoné (CSM) et/ou le caoutchouc silicone (MVQ) et/ou le caoutchouc fluoré (FPM).

2. Installation de transport selon la revendication 1, **caractérisée en ce que** la plaque de couverture (13) de la garniture de tambour est constituée d'un mélange de polymères expansés (10).
